(19)

Europäisches
Patentamt
European
Patent Office
Office européen
des brevets

(11) **EP 4 083 422 A1**

(12) **EUROPEAN PATENT APPLICATION**

(43) Date of publication:
**02.11.2022 Bulletin 2022/44**

(21) Application number: **21170620.5**

(22) Date of filing: **27.04.2021**

(51) International Patent Classification (IPC):
**F03D 7/04** (2006.01)

(52) Cooperative Patent Classification (CPC):
**F03D 7/045; F03D 7/046;** F05B 2270/204;
F05B 2270/321

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
A/S**
**7330 Brande (DK)**

(72) Inventor: **Gebraad, Pieter M. O.**
**2720 København (DK)**

(74) Representative: **SGRE-Association
Siemens Gamesa Renewable
Energy GmbH & Co KG
Schlierseestraße 28
81539 München (DE)**

(54) **MONITORING OF WIND DIRECTION MEASUREMENTS IN WIND PARKS**

(57)      A method (300) for monitoring the validity of a calibration of a system parameter is provided. A calibrated system parameter (301, 302, 30N) is generated based on the calibration by each of a plurality (200) of spatially associated wind turbines of a wind park. The plurality of spatially associated wind turbines comprises a first wind turbine and a second wind turbine. The method comprises subtracting (S310) from a first signal representing the calibrated system parameter measured at the first wind turbine (241) a second signal representing the calibrated system parameter measured by the second wind turbine (242) in order to generate a difference signal, processing (S320) the difference signal by a function based on a stochastic model to generate a decision data signal (321) and determining (S330), based on the decision data signal, if the calibrated system parameter of at least one of the first wind turbine and the second wind turbine is based on an invalid calibration.

FIG 3

EP 4 083 422 A1

**Description**

FIELD OF THE INVENTION

The present invention relates to a method for monitoring the validity of a calibration of a system parameter by each of a plurality of spatially associated wind turbines. It further relates to a computer program for performing such method and a control system configured to carry out such method.

BACKGROUND

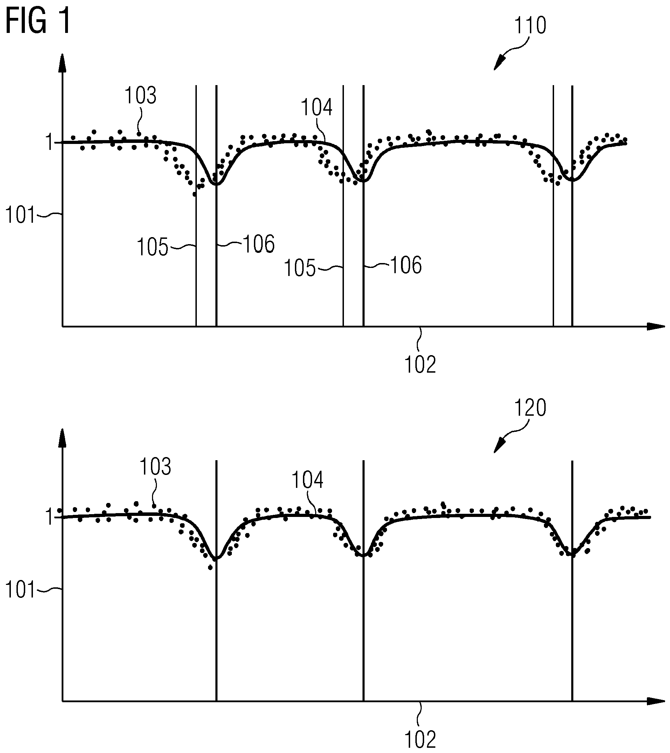

It is important to have an accurate absolute wind direction measurement on each wind turbine in a wind park for the control of the wind park and in particular for wake or noise control. Wake effects within wind parks decrease the power production and increase the cost of electricity and, thus, it is important to keep wake effects at a low level. Noise emission of wind parks has to be reduced to a minimum volume or directed away from nearby urban areas. The efficiency of both the noise control and the wake control strongly depends on the accuracy of absolute wind direction measurement. The accuracy of the absolute wind direction measurements has therefore to be maximized in order to ensure that negative wake effects and noise emission can be reduced significantly.
A calibration can be performed in order to improve the accuracy of the detection of the absolute wind direction. Figure 1 shows a set of schematic diagrams illustrating data plots related to such a calibration method. The calibration method is based on an alignment of wake profiles generated by a measured power ratio 103 and a respective predicted power ratio 104. The predicted power ratio 104 is predicted by a wake model based on information of the layout of the wind park and measured data, e.g. the non-calibrated absolute wind direction. The first data plot of figure 1 shows the wake profiles before calibration 110 and the second data plot shows the wake profiles after calibration 120. The vertical axis 101 of the first and second data plots represents the power ratio of the production power of two spatially associated wind turbines and the horizontal axis 102 represents the absolute wind direction from 0 to 360 degrees. For the calibration, the wake profile generated by the predicted power ratio 104 is shifted by the application of an optimization or brute force method to approximately align it with the wake profile generated by the measured power ratio 103. The measured dips 105 and the predicted dips 106 are aligned therefor by adapting a correction value which is added to the non-calibrated absolute wind direction. The required data for the measured power ratio 103 enabling such a calibration method has to be collected over a time period of several weeks (at least 60 days). After an initial calibration, the measured absolute calibrated wind direction of a respective wind turbine can abruptly become invalid again during its operation. From this moment, new data has to be collected over the time period of several weeks in order to be able to detect such a change and to recalibrate and correct the absolute wind direction. During this time period of several weeks, the absolute wind direction is inaccurate and neither a reliable wake control nor noise control, nor wind park analysis can be performed.
As indicated by the above explanations, the calibration method requires a complex modelling of the wake model, rather high computation power for aligning the measured and predicted wake profiles by an optimization method, and collecting data over a long period of time, which results in a long time required for detecting an invalid calibration and, hence, a long reaction time until the invalid calibration is corrected.

SUMMARY

Accordingly, there is the need to mitigate at least some of the drawbacks mentioned above and to provide a method for monitoring the validity of a calibration of a system parameter in a fast, reliable and efficient way.
This need is met by the features of the independent claims. The dependent claims describe embodiments of the invention.
According to an embodiment of the invention, a method for monitoring the validity of a calibration of a system parameter is provided. A calibrated system parameter is generated based on the calibration by each of a plurality of spatially associated wind turbines of a wind park. The plurality of spatially associated wind turbines comprises a first wind turbine and a second wind turbine. The method comprises subtracting from a first signal representing the calibrated system parameter measured at the first wind turbine a second signal representing the calibrated system parameter measured by the second wind turbine in order to generate a difference signal, processing the difference signal by a function based on a stochastic model to generate a decision data signal and determining, based on the decision data signal, if the calibrated system parameter of at least one of the first wind turbine and the second wind turbine is based on an invalid calibration.
Such method may allow, based on the generated decision data signal, to immediately detect an invalid calibration of the calibrated system parameter, which may be the measured absolute wind direction, of one or more wind turbines and to correct such a corruption. A delay or a reaction time of several weeks does not occur since collection of data over a longer time period is not necessary. The method may be fully data driven, it may be an automatic software solution requiring no additional hardware, e.g. additional sensors in order to provide a redundant measurement of the calibrated system parameter. Since less data has to be processed by the proposed solution and no optimization method may need to be applied, performing the method may also require less computation power. Detecting an incorrectly calibrated system parameter in such a fast and efficient way has consequently a positive effect on the wake control resulting in a higher annual energy production, on the noise control resulting in a more efficient noise adaption, which is in particular demanded for onshore locations, and on the data analysis on wind park level, e.g. for the validation of wind turbine loads in wake conditions.

The stochastic model may be based on stochastic characteristics generated from empirical and/or historical data of the difference signal, e.g. the expected value, the standard deviation and/or the variance. The stochastic model may further involve the stochastic characteristics in a mathematical representation of an assumed probability distribution, e.g. the mathematical representation of the normal distribution.

A plurality of spatially associated wind turbines may be a group of spatially associated wind turbines. The wind turbines of the group may be positioned such that effects on a single wind turbine affect at least a portion of the other wind turbines of the group in a similar or same way. An example is that the wind turbines of the group are positioned so close to each other that approximately the same wind direction is measured by each wind turbine.

The method may be performed for each wind turbine of the group by forming a pair of this wind turbine with another wind turbine of the group.

The group of spatially associated wind turbines may comprise a wind turbine of the group and n-1 wind turbines of the wind park closest to the wind turbine, wherein n is the number of wind turbines in the group. This means the n-1 wind turbines of the wind park are positioned in the smallest distance relative to the n-th wind turbine.

The group of spatially associated wind turbines may alternatively comprise a wind turbine of the group and n-1 wind turbines of the wind park, wherein n is the number of wind turbines in the group, and wherein the measured absolute wind direction of the n-th turbine correlates best to the measured absolute wind directions of the n-1 wind turbines of the wind park. Preferably, the measured absolute wind direction of the n-th turbine correlates best to the measured absolute wind directions of the n-1 wind turbines of the wind park, wherein the n-1 wind turbines have the smallest absolute expected value for the measured absolute wind direction difference relative to the n-th turbine or, wherein the n-1 wind turbines have the smallest standard deviation for the measured absolute wind direction relative to the n-th turbine.

The calibrated system parameter may be a measured calibrated absolute wind direction. The calibration may be a directional calibration, e.g. a North calibration. The measured calibrated absolute wind direction of a wind turbine may be based on a measurement of the wind direction and on a measured nacelle angular position of that wind turbine. A sensor for measuring the wind direction may for example be mounted to the nacelle.

The absolute wind direction may be the wind direction relative to North. The wind direction (relative wind direction) may be measured for a wind turbine relative to the orientation (angular position) of the nacelle thereof, and the absolute wind direction may be derived from such measurement. The absolute wind direction is measured in accordance with the meteorological wind direction, wherein the meteorological wind direction counts in clockwise direction starting from North and comprises a range from 0 to 360 degrees.

The measuring of the calibrated system parameter may be performed such that the parameter is directly measured or indirectly measured and further processed in order to generate the parameter. It is in particular possible that a relative measured signal is used to approximate the respective absolute signal by adding an offset to the relative measured signal, which may generate the parameter. For example, a measured relative wind direction may be measured (e.g. in degrees) by a wind turbine and added to the angular position (e.g. in degrees) of the nacelle of the wind turbine in order to generate an absolute wind direction.

The stochastic model may comprise an expected value for a difference of the calibrated system parameter measured at the first wind turbine and the second wind turbine. Processing the difference signal by the function based on the stochastic model may comprise comparing the difference signal to the expected value.

The decision data signal may comprise an indication if one of the first wind turbine or the second wind turbine is based on an invalid calibration. It may for example comprise a result of the comparison. In a simple example, it may comprise a Boolean data type which is true to indicate that the first or second wind turbine is based on an invalid calibration or is false if not, or it may comprise a deviation derived from the comparison. It may further comprise corresponding information about other pairs of wind turbines from the plurality of the spatially associated wind turbines.

The stochastic model may further comprise a limit for an allowable deviation from the expected value. Comparing the difference signal to the expected value may comprise determining if the deviation of the difference signal from the expected value exceeds the limit.

The limit may define a confidence interval and the confidence interval may include a range of values of the difference signal, in which a value of the difference signal is expected (assuming a correct calibration).

The decision data signal may comprise information indicating if the deviation of the difference signal from the expected value exceeds the limit.

In particular, if the decision data signal indicates that the deviation of the difference signal from the expected value exceeds the limit, it is determined that the calibration of the system parameter of at least one of the first wind turbine and the second wind turbine is invalid.

In an embodiment, the expected value is generated by monitoring the difference of the calibrated system parameter measured at the first wind turbine and the second wind turbine over a predetermined period of time and averaging the monitored difference over the period of time. For generating the expected value, the system parameter is measured at the first wind turbine and the second wind turbine, e.g. when both are correctly calibrated. The monitored difference may comprise historically monitored difference signal data. The predetermined period is preferably 0.5 to 3 months, e.g. 1 to 2 months.

Generating the expected value in such a way allows a high robustness of the detection of an invalid calibration since the empirical data contains system information of the correlation of the first and second wind turbine in a correctly calibrated state.

The limit may be determined based on a standard deviation of the difference signal around the expected value. It should be clear that the standard deviation is generated from the same data as the expected value. The expected value and the standard deviation associated with the first and second wind turbines, which form a first pair of wind turbines, are a first pair of stochastic characteristics being comprised by a set of stochastic characteristics, wherein the set of stochastic characteristics comprises further pairs of stochastic characteristics, wherein each is associated with a combination of two wind turbines of the plurality of spatially associated wind turbines, the combinations forming further pairs of wind turbines. Preferably the number of combinations forming further pairs of wind turbines is n(n-1) or n(n-1)/2, wherein n is the number of single wind turbines of the plurality of spatially associated wind turbines.

The limit may further be determined by multiplying the standard deviation by a predetermined scaling factor. The scaling factor is preferably selected from the range of 1 to 4, preferably 1.2 to 3, e.g. 1.5 to 2. The scaling factor may be derived from a probability value, wherein the probability value represents the probability of a value of the difference signal of being or not being in the limit assuming a normal distribution. Such a conversion from the probability value to the scaling factor allows a tuning of the limit.

The limit may comprise an upper limit and a lower limit. The upper limit may be determined by the formula $\mu + z\sigma$ and the lower limit may be determined by the formula $\mu - z\sigma$, wherein $\mu$ is the expected value of the difference signal, $\sigma$ is the standard deviation of the difference signal and z is a scaling factor.

Considering a scaled standard deviation around the expected value allows a more precise configuration of the limit and accordingly reduces incorrectly detected invalid calibrations, for example due to measured outlier values. Using a scaling factor further increases the flexibility of the method.

According to an embodiment, processing the difference signal by the function based on the stochastic model further comprises applying a filter to the difference signal to generate a filtered difference signal, wherein the filtered signal is compared to the expected value. It should be clear that applying a filter to the difference signal may also be performed by applying the filter to the measured signals and forming the difference thereafter, resulting in the filtered difference signal.

The filter may be a low-pass filter. The low-pass filter is preferably a moving average filter. The applying of the moving average filter may calculate a moving average over a predetermined time period and in particular over a time period of 1 day. The filter may also be a simple gain element scaling the input signal by a given factor and the given factor may even be equal 1, it is however preferably smaller or larger than 1.

According to an embodiment, it is determined that at least for one of the first and second wind turbines, the calibrated system parameter of which is based on an invalid calibration, the method further comprises identifying for which of the first and the second wind turbines the calibrated system parameter is based on an invalid calibration, i.e. is an invalidly calibrated system parameter.

The determining if the calibrated system parameter is based on an invalid calibration may be performed for each of plural pairs of said wind turbines. The method may further comprise identifying, based on said determining, a reference wind turbine the calibration of the system parameter of which is not invalid. The method may further comprise, if for at least one of the first and second wind turbine it is determined that the calibration of the system parameter is invalid, comparing the measured calibrated system parameter of at least one of the first and second wind turbine to the measured calibrated system parameter of the reference wind turbine to determine for which of the first and second wind turbine the calibration is invalid.

It should by clear that said determining may also include said subtracting for generating the difference signal and said processing for generating the decision data signal for each of the plural pairs of wind turbines.

Said plural pairs of wind turbines may comprise for each wind turbine of a group of wind turbines pairs of the wind turbine with each other wind turbine of the group. Identifying the reference wind turbine may comprise determining for which wind turbine of the group the decision data signal indicates for the largest number of pairs that the calibrated system parameter is not based on an invalid calibration.

For example for a group of three wind turbines, one of which has an invalid calibration, the decision data signal may indicate for two of them that the calibration is valid, and either one of them or both may be selected as the reference wind turbine. The decision data signal of the other wind turbine might then indicate an invalid calibration when compared to the reference wind turbine (i.e. for the respective pair), so that it can be determined that it is this wind turbine for which the calibration is invalid.

Alternatively or additionally, identifying the reference wind turbine may comprise determining for which wind turbine of the group the decision data signal indicates for the largest number of pairs that the calibrated system parameter is based on an invalid calibration and selecting a different wind turbine of the group as the reference wind turbine.

The group of wind turbines may comprise such a wind turbine as indicated above.

Doing so, the validity of the calibration of the system parameter of each wind turbine from the plurality of spatially associated wind turbines is monitored. As soon as an invalidity of a calibration is determined for one or more wind turbine pairs, the reference wind turbine can be used in order to identify which wind turbine of each pair is based on an invalid calibration.

According to another embodiment, the method further comprises, if it is determined that the calibrated system parameter of at least one of the first wind turbine and the second wind turbine is based on an invalid calibration, i.e. is an invalidly calibrated system parameter, the recalibrating of the invalidly the calibrated system parameter. For example, the recalibrating may comprise for each invalidly calibrated system parameter, correcting the invalidly calibrated system parameter by applying a correction value based on an average of a series of deviations. The series of deviations may comprise at least one deviation between the invalidly calibrated system parameter and a calibrated system parameter of at least one of the plurality of wind turbines the calibration of the system parameter of which is not invalid.

Recalibrating may additionally or alternatively comprise resetting a reference for the calibrated system parameter based on a deviation between the invalidly calibrated system parameter and a calibrated system parameter of at least one of the plurality of wind turbines the calibration of which is not invalid. For example, a value of a certain angle of the wind sensor may be set (e.g. relative to North or relative to the nacelle), and/or a value of a certain angle of nacelle angular position may be set, e.g. relative to North.

Recalibrating may for example comprise for each invalidly calibrated system parameter applying the correction factor to a yaw controlling system of the respective first or second wind turbine. Preferably, applying the correction factor to the yaw controlling system comprises applying the correction factor to the yaw encoder signal.

The method may further comprise outputting a series of monitored calibrated system parameters, wherein one monitored calibrated system parameter is associated with one of the plurality of spatially associated wind turbines and providing the series of monitored calibrated system parameters to a wind park control and in particular to a wake control or noise control.

According to an embodiment of the invention, a computer program for monitoring the validity of a calibration of a system parameter individually generated by a plurality of spatially associated wind turbines is provided. The computer program comprises control instructions which, when executed by a processing unit, cause the processing unit to perform any of the herein described methods for monitoring the validity of a calibration of a system parameter individually generated by a plurality of spatially associated wind turbines. The computer program may be provided on a volatile or non-volatile storage medium or data carrier.

According to an embodiment of the invention, a control system for monitoring the validity of a calibration of a system parameter individually generated by a plurality of spatially associated wind turbines is provided. The control system is configured to perform any of the herein described methods. By such control system, advantages similar to the one outlined further above may be achieved. The control system may include respective sensors for measuring the system parameter, e.g. a wind sensor and/or an encoder of the yaw drive of a wind turbine. The control system may further include any of the elements described herein with respect to the method.

The control system may for example include a processor and a memory, the memory storing control instructions which when executed by the processor of the control system, cause the control system to perform any of the methods described herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

BRIEF DESCRIPTION OF THE DRAWINGS

The forgoing and other features and advantages of the invention will become further apparent from the following detailed description read in conjunction with the accompanying drawings. In the drawings, like reference numerals refer to like elements.

Fig. 1 is a set of schematic diagrams illustrating data plots related to a calibration method that uses a wake profile for calibration.

Fig. 2 is a schematic drawing illustrating nacelle position measurements of a group of spatially associated wind turbines of a wind park before and after absolute wind direction calibrations.

Fig. 3 is a schematic flow diagram describing a method of monitoring the validity of a calibrated system parameter according to an embodiment.

Fig. 4 composed by figures 4a and 4b is a set of schematic diagrams illustrating difference signals of measured nacelle positions of pairs of wind turbines from a group of spatially associated wind turbines.

Fig. 4a is the first part of figure 4.

Fig. 4b is the second part of figure 4.

Fig. 5 is a schematic drawing showing a control system for monitoring the validity of a calibrated system parameter according to an embodiment.

DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

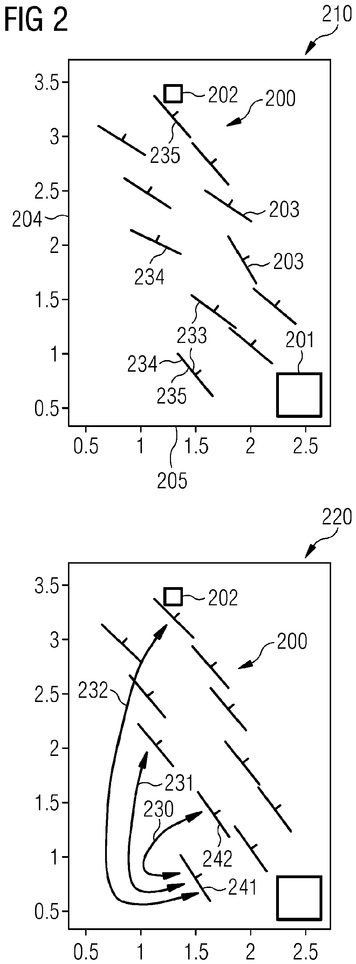

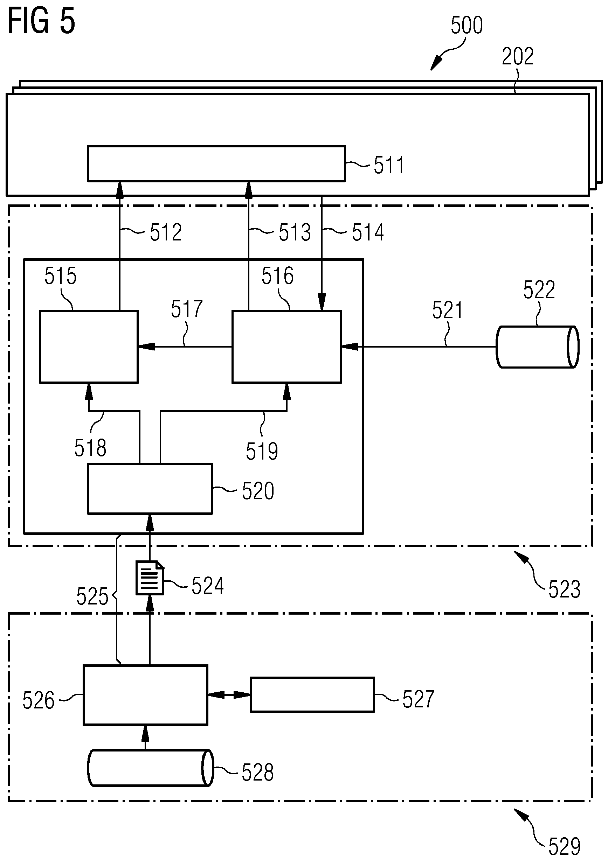

Figure 2 is a schematic drawing illustrating nacelle position measurements 210, 220 of a group 200 of spatially associated wind turbines of a wind park before and after absolute wind direction calibrations. The calibration of the absolute wind direction aims at providing the respective wind turbine with an absolute measure of the wind direction with respect to the geographical orientation (e.g. North is 0 degrees). Both states of the nacelle position measurements 210, 220 are depicted in a respective diagram comprising a horizontal easting axis 205 and a vertical northing axis 204. Both axes are scaled in kilometers. The group 200 of spatially associated wind turbines is comprised in a wind park. It should be clear that the wind park may comprise a second or further of such groups of wind turbines. Each wind turbine 203 of the group 200 of spatially associated wind turbines is associated with a wind turbine controller 202 controlling the respective wind turbine 203 and the wind park comprises a wind park controller 201 controlling the wind park (see figure 5). However, for the sake of simplicity, figure 2 shows only one wind turbine controller 202. The wind turbine controller 202 comprises a control system, e.g. a yaw control system, which is able to rotate the nacelle of a respective wind turbine towards a direction based on the measured (calibrated) absolute wind direction. Since the measured (calibrated) absolute wind direction of a single wind turbine is based on its measured nacelle position, the quality of the North calibration can be derived from the conformity of the nacelle position measurements of the group 200. It can be seen in the right diagram 220 of figure 2 that after performing an initial North calibration of the measured absolute wind direction by each wind turbine 203 in the group 200, the nacelle position measurements are generally better aligned with each other. Accordingly, the measured calibrated absolute wind directions are also better aligned. It can also be seen by comparing the nacelle position measurements of the wind turbines after calibration 220 and the nacelle position measurements of the wind turbines before calibration 210 that the variation of the nacelle position measurements of the wind turbines after calibration 220 is significantly reduced, but is still existent.

The difference between the calibrated absolute wind direction is measured by each of a pair of wind turbines 203 of the group 200 and can be stochastically characterized. For each pair from the group 200 a 'bias' (regarded as expected value $\mu$) and variance $\sigma^2$ /standard deviation $\sigma$ can be derived to stochastically model the respective measurement difference. Figure 2 shows a number n=11 wind turbines 203 and indicates exemplarily three pairs 233, 234, 235 from a total of 55 possible pairs (n(n-1)/2). In the right-hand drawing, the stochastic characteristics 230, 231, 232 describing the difference signal between each pair 233, 234, 235 are indicated by arrows. Pair 233 comprises a first wind turbine 241 and a second wind turbine 242. The stochastic characteristics 230, 231, 232 are $\mu1$ and $\sigma1$ for the first pair 233, $\mu2$ and $\sigma2$ for the second pair 234, and $\mu3$ and $\sigma3$ for the third pair 235. If the sequence of the two values to be subtracted is taken into account, the stochastic characteristics of n(n-1) pairs may be calculated, which is 110 pairs in the given example. The expected value for this difference is related to the average non-uniformity of the inflow of wind into the wind park, and possibly remaining small offsets in the North calibration.

The variance may be related to a local turbulence and/or other spatial and temporal variation of the wind field.

The variance and the expected value of such a difference signal typically increase with the distance that wind turbines from each other. The difference signal can be compared to a limit in which the difference is expected. Such comparison can be used in order to detect an invalid calibration. The limit of the difference signal is therefor based on the stochastic characteristics defining a range of values (confidence interval) in which a value of a respective difference signal is expected. As outlined above, the stochastic characteristics for one pair from the group of spatially associated wind turbines differ from those of another pair and thus the stochastic characteristics may be generated individually for each pair from the group 200.

The stochastic characteristics are derived from empirical data sets. The expected value of the difference signal of the measured absolute wind directions of one pair (mean difference of the measured absolute wind direction) is estimated by averaging the difference between two measured correctly calibrated absolute wind directions over a determined longer period, e.g. 1-2 months. Based on the same data set, variance and standard deviation can be derived. This is for example performed by calculating the mean absolute deviation from the mean difference of the measured calibrated absolute wind direction. The initial calibration may for example be performed as described above with respect to figure 1.

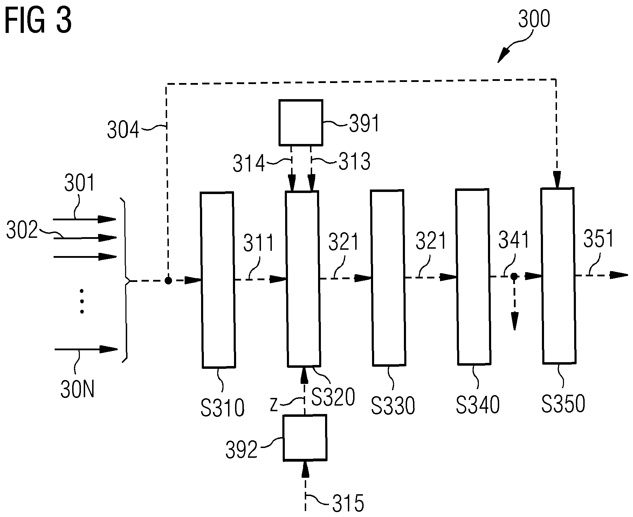

Figure 3 is a schematic flow diagram describing a method 300 for monitoring the validity of a calibrated system parameter of the group 200 of spatially associated wind turbines according to an embodiment. Each of the n wind turbines 203 of the plurality 200 of spatially associated wind turbines (referring to figure 2, n is equal to 11) individually measures and provides the calibrated system parameter. The n calibrated system parameters 301, 302, 30N, which are associated with the first, second and n-th wind turbine 203, are indicated in figure 3 using the solid line arrows. The calibrated system parameter is in the shown example the measured absolute calibrated wind direction. The n measured absolute calibrated wind directions are combined to a set of calibrated system parameters 304. It should be clear that the invention is not limited to such implementation using a set or array. In this case the sets are only used for the ease of the explanation of figure 3 and to emphasize that a portion of the depicted signal flow is multidimensional and not for scalars or one-dimensional numbers only. A set is generally represented in figure 3 by using a dashed line arrow. The set of calibrated system parameters 304 comprises n elements.

In step S310, for each pair from the set of calibrated system parameters 304 the difference signal is generated by subtracting the measured calibrated system parameter of one turbine from that of the other. If the sequence of two signals to be subtracted is considered, the result is a set of difference signals 311 comprising n(n-1) elements. If for example a group consists of 5 spatially associated wind turbines, the set of calibrated system parameters 304 comprises 5 elements and the set of difference signals 311 comprises 20 elements (each of the 5 elements combined with the 4 other elements). It should by clear that it is not necessary to use each possible pair, but the method may equally be used with a subset of possible pairs.

In step S320 the set of difference signals 311 is processed by a function based on a stochastic model and generates a decision data signal 321. The decision data signal 321 comprises the information if at least one of the wind turbines of each pair is based on an invalid calibration. In a simple example, the decision data signal may comprise a set of true/false values, e.g. represented as an array of Booleans. Each true/false value of the set may be associated with one respective element from the set of difference signals 311 and, accordingly, is associated with the respective pair of wind turbines. Further, each true/false value may represent a true value if at least one of the respective pair of wind turbines is based on an invalid calibration or a false value if not.

In order to generate the decision data signal 321, each difference signal of the set of the difference signals is compared to a limit which is individually generated based on empirical data for the respective pair of wind turbines. Each limit defines a confidence interval in which a value of the difference signal of a pair of wind turbines is expected. If it is determined S330 based on the decision data signal 321 that the deviation of a difference signal exceeds such a limit, it is determined that the calibration of the system parameter of at least one of the wind turbines of a respective pair of wind turbines is invalid.

In order to determine the limit for each pair of wind turbines, the expected value and standard deviation of the respective difference signal is calculated based on monitored data of the respective difference signal. The monitored data is generated by monitoring the difference signal of a wind turbine pair in operation over a period which for example lasts for 1-2 months. It is ensured during the period that the calibrated system parameter measured by each of the pair of wind turbines is correctly calibrated (e.g. by performing the measurement directly after a calibration carried out in accordance with the method of figure 1). The result is a set of expected values 313 and a set of standard deviations 314 which can be stored and later be provided by a data source 391. The data source may be a data base, preferably stored on a wind park server comprised by the wind park. The limit for each pair is then determined based on the standard deviation of the difference signal around the expected value.

The mathematical representations of the limit described hereinafter are exemplary given for the first wind turbine 241 and the second wind turbine 242 forming pair 233. It should be clear that the equations can be applied to any other pair of wind turbines from the group of spatially associated wind turbines in a corresponding way. The mathematical representation of the limit can be given for pair 233 by

$$\mu12 - \sigma12 \leq csp1 - csp2 \leq \mu12 + \sigma12, \text{ (eq. 1).}$$

In equation 1 $\mu12$ is the expected value of the calibrated system parameter 2 (csp2) measured at the first wind turbine 241 subtracted from the calibrated system parameter 1 (csp1) measured at the second wind turbine 242 and $\sigma12$ is the standard deviation of the measured calibrated system parameter 2 (csp2) subtracted from the measured calibrated system parameter 1 (csp1). In an embodiment, the standard deviation may further be multiplied by a scaling factor z which leads to

$$\mu12 - \sigma12*z \leq csp1 - csp2 \leq \mu12 + \sigma12*z, \text{ (eq. 2).}$$

Such scaling factor may be the same for all pairs of wind turbines or determined individually. Scaling factor z allows a more specific tuning of the confidence interval. In another embodiment, each of the difference signals may further be shifted by the respective expected value and normalized by the respective standard deviation. It is then determined if each shifted and normalized difference signal exceeds its respective scaling factor. This leads for the given example of the confidence interval to

$$-z \leq ((csp1 - csp2) - \mu12)/ \sigma12 \leq +z, \text{ (eq. 3).}$$

The mathematical representation of the limit according to equation 3 is advantageous since the expected value and standard deviation differs between the single pairs of wind turbines. The process of shifting and normalizing however restricts the limit of each pair to the scaling factor z chosen for that pair. As outlined above, the scaling factor z may be chosen individually for each pair of wind turbines.

However, in order to provide representation of scaling factor z that is more easily understood, it is also conceivable that a function 392 may be used which converts a probability value p to scaling factor z. The probability value may represent the probability p that a value of the difference signal does not exceed the limit, or the probability q=1-p that a value of the difference signal exceeds the limit assuming a normal distribution. The limit is then set by scaling factor z such that it comprises or does not comprise a value of the difference signal for the given probability. Such function 392 may be based on the inverse function of the cumulative distribution function ifcdf of the normal distribution and be implemented by the equation

$$z = 2*ifcdf((p+1)/2) = 2*ifcdf(1-q/2), \text{ (eq. 4).}$$

Table 1 shows z values derived by equation 4 and given p, q.

Table 1: exemplary values for z, p and q

| P | q | z |
|---|---|---|
| 0.50 | 0.50 | ~0.674 |
| 0.90 | 0.10 | ~1.645 |
| 0.99 | 0.01 | ~2.576 |

It can thus be seen how the probability changes with changing the scaling factor z, and the scaling factor z may be chosen in accordance with the desired probability.

In another embodiment, a filter is applied to the difference signal to generate a filtered difference signal and the filtered signal is compared to the limit. Starting for example from equation 2 this leads to

$$\mu12 - \sigma12*z \leq F(csp1 - csp2) \leq \mu12 + \sigma12*z, \text{ (eq. 4),}$$

wherein F represents the filtering. Such filter may be a low-pass filter in order to smooth out outlier of the difference signal which are not due to an invalid calibration. The low-pass filter is preferably a moving average filter. The applying of the moving average filter calculates a moving average over a predetermined time period and in particular over a time period of 0.5-2 days, e.g. 1 day. The filter may also be a simple gain element scaling its input signal by a given factor and the given factor may even be equal to 1.

The input data of the filter may be restricted to such data which passes a given condition, e.g. a wind direction sensor status which is non-faulty or a wind turbine that is operating without error mode.

It is also possible that it is not the difference which is filtered but both calibrated system parameters measured by a pair of wind turbines before generating the difference signal. In such embodiment the difference of the filtered measured calibrated system parameters is compared to the limit, which is represented by equation 5.

$$l1 \leq F1(csp1) - F2(csp2) \leq l2, \quad (eq. \ 5),$$

wherein l1 is the lower limit and l2 is the upper limit. Such filters F1 and F2 may be but are not limited to a low-pass filter. However, if the same low-pass filter is used for filtering the first and second signal (F1 and F2 are equal to F) it can be shown that

$$l1 \leq$$
$$F1(csp1) - F2(csp2) = F(csp1) - F(csp2) = F(csp1 - csp2)$$
$$\leq l2, \quad (eq. \ 6).$$

Thus, if l1 and l2 are aligned in accordance with equation 4, equation 6 is equal to equation 4.

If the difference signal of a pair of wind turbines exceeds the respective limit according to any of the outlined embodiments, information of such exceeding is stored in the decision data signal 321.

After it is determined (S330) based on the decision data signal that at least one of the measured calibrated system parameters of a pair of wind turbines is based on an invalid calibration, it is identified (S340) for which wind turbine of the pair the calibration is invalid. Such identifying S340 is necessary, since an exceeding of the limit of the difference signal associated with a pair of wind turbines does not reveal which of both turbines is based on an invalid calibration or if even both turbines are based on an invalid calibration. In a first step, a reference wind turbine the calibration of the system parameter of which is not invalid is identified.

In an embodiment, the reference wind turbine is determined by determining for which wind turbine of the group of wind turbines the decision data signal indicates for the largest number of pairs that the calibrated system parameter is not based on an invalid calibration (difference does not exceed the limit). For example, it may be counted for each wind turbine in the group the number of wind turbines a wind turbine is consistent with (i.e. for which the measured difference signal is within limits). The wind turbine which is consistent with most other wind turbines is identified as the reference wind turbine. If there are a plurality of reference wind turbine candidates all having a calibration that is consistent with the greatest number of other wind turbines, a random choice may be applied. The identifying S340 further comprises a second step of comparing the measured calibrated system parameter of both wind turbines of the determined pair to the measured calibrated system parameter of the reference wind turbine to determine for which of both wind turbines of the determined pair the calibration is invalid. For example, if the first (or second) wind turbine of the determined pair is consistent with the reference wind turbine (difference does not exceed the limit) or is in fact the reference wind turbine itself, then the system parameter measured by the first (or second) wind turbine is most likely not corrupted. If the first (or second) wind turbine of the determined pair is not consistent with the reference wind turbine (difference exceeds the limit), the first (or second) wind turbine is likely based on an invalid calibration.

The above determination of which wind turbine has an invalid calibration may be improved by involving information about that wind turbine which is inconsistent with most other wind turbines and/or by identifying at least a second reference wind turbine (chosen by the second greatest number of wind turbines that wind turbine is consistent with) the system parameter of which may be additionally compared to those of the determined pair of wind turbines.

The result of the identifying S340 is a set of identified wind turbines 341 the measured system parameter of which is based on an invalid calibration, i.e. is an invalidly calibrated system parameter. It should be clear that such a set 341 may comprise only one identified wind turbine. Such set 341 may be communicated in one embodiment to the wind park controller 201 and further processed, e.g. displayed via a human machine interface. In another embodiment, step S350 is further performed. In step S350, for each wind turbine from the set of identified wind turbines 341, the invalidly calibrated system parameter is recalibrated. The calibrated system parameter may be corrected by applying a correction factor based on an average of a series of deviations between the measured invalidly calibrated system parameter and the measured correctly calibrated system parameters. The correction factor may for example be applied to the yaw controlling system of that turbine the measured calibrated system parameter of which is invalid. Since the yaw controller system rotates the position of the nacelle in a direction based on the wind direction relative to the position of the nacelle the correction factor may in particular be added to the yaw encoder signal. Additionally or alternatively, the correction factor may also be applied to the measured wind direction measured by a wind sensor relative to the yaw drive, or to a wind direction measured by a wind sensor independent of any yaw drive (e.g. a wind sensor not mounted to the nacelle). Inserting the correction factor in such almost non-invasive way allows implementing the method in a running control system with low effort and by a simple retrofitting process.

Before applying the correction factor, additional conditions may be checked in order to prevent an undesired yaw misalignment, e.g. if the North calibration offset was manually changed or the sensor might be twisted. In the case of a twisted sensor, a warning might rather be output than an automatic correcting performed. An alternative implementation may in addition or instead of applying a correction factor reset the reference for the invalidly calibrated system parameter, e.g. by setting a certain angle of the wind sensor that corresponds to North.

The set of corrected calibrated system parameters 351 may be further processed and is for example communicated to the wind park controller 201.

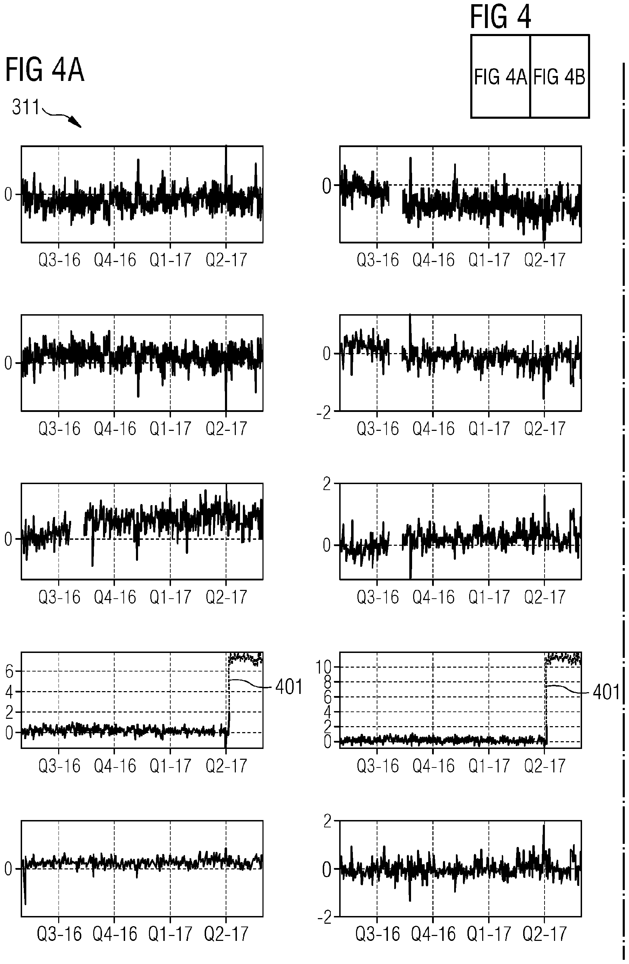

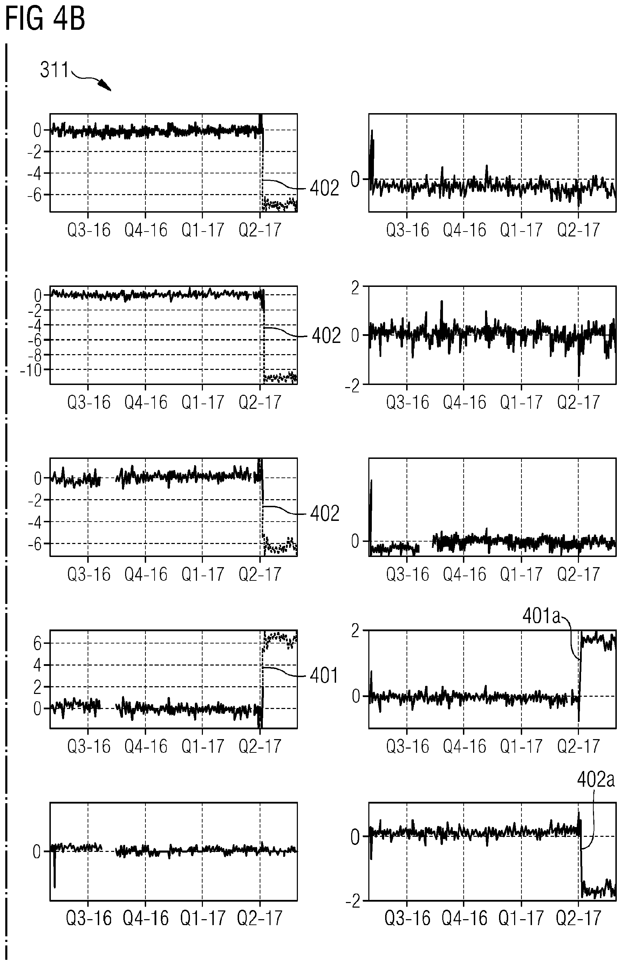

Figure 4 is a set of twenty schematic diagrams illustrating difference signals of the measured nacelle positions of pairs of wind turbines from a group of spatially associated wind turbines. Figure 4 is composed by figures 4a and 4b, wherein both figure 4a and figure 4b are aligned to each other by the vertical dashed line. The measured absolute wind direction of a wind turbine may be derived from the position of the nacelle of the wind turbine, which is why the usage of the nacelle position is possible. However, it is more efficient to compare wind direction signals in order to allow yaw offsets for e.g. wake steering control. Referring to figure 3, the depicted set of difference signals 311 in figure 4 is an example for the result of method step 310. In the given example, the group comprises five spatially associated wind turbines. The sequence of two signals to be subtracted from each other is considered and thus the set of difference signals comprises n(n-1) = 20 signals. The monitored pairs of wind turbines generating the set of difference signals 311 can also be seen in table 2. By the use of symmetry, the information contained in the n(n-1) difference signals may also be derived from the n(n-1)/2 difference signals associated only with unique pairs (no consideration of the subtraction sequence) of turbines. The position in the table corresponds to the position of the respective diagram showing the respective signal.

Table 2: Possible combinations for generating a set of difference signals given a group of five spatially associated wind turbines (W1, W2, W3, W4, W5)

| | | | |
|---|---|---|---|
| W3-W4 | W3-W2 | W3-W5 | W3-W1 |
| W4-W3 | W4-W2 | W4-W5 | W4-W1 |
| W2-W3 | W2-W4 | W2-W5 | W2-W1 |
| W5-W3 | W5-W4 | W5-W2 | W5-W1 |
| W1-W3 | W1-W4 | W1-W2 | W1-W5 |

Each diagram in figure 4 shows a difference signal shifted by the respective expected value and normalized by the respective standard deviation according to equation 3. The expected value and the standard deviation of each pair are individually derived based on the respective empirical data for each pair. The scaling factor z is set in this example equal to the value which corresponds to a value $p \approx 0.95$ and a value $q \approx 0.05$. The horizontal axis describes the time and is shown over a period of one year which is indicated by four quarters. The vertical axis represents the value for the respective shifted (i.e. the expected value is subtracted) and normalized (by the standard deviation) difference signal; a unit of the values of the vertical axis can thus not be given (per unit). Although wind turbine W5 is based on an invalid calibration, it can be seen that not all difference signals based on the invalid calibrated system parameter of wind turbine W5 are detected. The detected rising edges 401 exceeded the upper limit (positive number two), the detected falling edges 402 exceeded the lower limit (negative number two) but the change of the undetected rising edge 401a and the undetected falling edge 402a does not exceed the upper and lower limit, respectively. The detected difference signals do not indicate which turbine is based on an invalid calibration. However, the result of applying the step of identifying S340 clearly indicates that wind turbine W5 is based on an invalid calibration.

Figure 5 is a schematic drawing showing a control system according to an embodiment and illustrating a signal flow chart for an implementation of the method of figure 3 for monitoring the validity of a calibrated system parameter according. The control system may include the wind park controller 201, which may be implemented as a wind park server 523. It may communicate with or include the wind turbine controllers 202. The wind park controller may for example comprise a processor and a memory that stores control instructions which when carried out by the processor cause the wind park controller to perform any of the methods described herein. The processor may be any kind of processor, such as a microprocessor, an application specific integrated circuit, a digital signal processor or the like. The memory may include volatile and non-volatile memory, in particular RAM, ROM, FLASH-memory, hard disc drives and the like.

The method may for example be implemented on the wind park server 523. The wind park server 523 receives by an upload process 525 at North calibration upload user interface 520 a North calibration configuration file 524 comprising data for an initial calibration. The data for the initial calibration is generated by a data-driven North calibration tool 526 comprised by a PC/VDI application 529. The data-driven North calibration tool 526 exchanges information with wake model 527 and receives data from wind farm data base 528. Generating the data for the initial calibration may be based on the prior art calibration method as outlined in the background section. The PC/VDI application may form part of the control system.

After the initial calibration is applied the method for monitoring is enabled. The wind park North calibration monitor 516 continuously collects, e.g. one time per 10 minutes, a set of wind direction statistical data 521 for each pair of wind turbines being monitored. The statistical data 521 comprises the set of calibrated system parameters measured for that sample. The statistical data may be stored in the wind park server data base 522 but can also be received directly from each monitored wind turbine. The wind park North calibration monitor 516 further receives a set of last yaw encoder reset times 514 and a set of monitor parameters 519. The set of last yaw encoder reset times may be used in order to detect a manually changed calibration or a twisted sensor. Based on the received information, the wind park North calibration monitor 516 determines the validity status of the measured calibrated absolute wind direction signals and outputs a North calibration validity status from a set of North calibration validity status 513 to the respective yaw encoder 511 of a wind turbine controller 202 from the set of wind turbine controllers 500. Each wind turbine controller 202 from the set of wind turbine controllers 500 is associated with one wind turbine from the group of spatially associated wind turbines. The calibration validity status may be provided to a wind turbine. Optionally or additionally, the calibration validity status is provided to other wind park applications, which can use the calibration validity status to determine whether the respective measured absolute wind direction on a particular wind turbine is useable for wake control, noise control or wind park data analysis.

Further, the wind park North calibration monitor 516 generates a set of North calibration corrections 517 comprising a North calibration correction for each wind turbine the wind direction measurement of which is based on an invalid calibration. Thus, a North calibration correction from the set of North calibration corrections 517 can be used to correct the calibration of the respective wind turbine. The set of North calibration corrections 517 is provided to a wind park North calibration interface 515 which also receives a set of uploaded North calibration offsets 518 from the North calibration upload user interface 520. The wind park North calibration interface 515 generates a set of corrected North calibration offsets 512 based on the input signals thereof and provides it to the set of wind turbines 500. A corrected North calibration offset from the set of North calibration offsets 512 is provided to the respective yaw encoder 511 in order to recalibrate the measured calibrated absolute wind direction of the respective wind turbine.

By such control system, a fast and precise detection of an invalid calibration becomes possible. In particular, based on the difference signals, it can be identified quite quickly is the calibration has become invalid for one of the wind turbines, as illustrated in figure 4. The calibration can further be corrected efficiently. It is not necessary to collect data for several weeks for detecting such miscalibration and for correcting it. Correct operation of noise control and wake control can thereby be achieved. It should be clear that for implementing the method, it is not necessary to monitor each possible pair of the group of wind turbines, but a predetermined number of pairs may be monitored that allows a reliable detection of an invalid calibration. Also, implementations other than adding a correction factor to a yaw drive encoder are conceivable for correcting an invalid calibration.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method (300) for monitoring the validity of a calibration of a system parameter, wherein a calibrated system parameter (301, 302, 30N) is generated based on the calibration by each of a plurality (200) of spatially associated wind turbines of a wind park, wherein the plurality of spatially associated wind turbines comprises a first wind turbine and a second wind turbine, the method comprising:

   subtracting (S310) from a first signal representing the calibrated system parameter measured at the first wind turbine (241) a second signal representing the calibrated system parameter measured by the second wind turbine (242) in order to generate a difference signal,
   processing (S320) the difference signal by a function based on a stochastic model to generate a decision data signal (321), and
   determining (S330), based on the decision data signal, if the calibrated system parameter of at least one of the first wind turbine and the second wind turbine is based on an invalid calibration.

2. The method (300) according to claim 1, wherein the calibrated system parameter (301, 302, 30N) is a measured calibrated absolute wind direction.

3. The method (300) according to any of claims 1 or 2, wherein the stochastic model comprises an expected value for a difference of the calibrated system parameter measured at the first wind turbine (241) and the second wind turbine (242), and wherein processing (S320) the difference signal by the function based on the stochastic model comprises comparing the difference signal to the expected value.

4. The method (300) according to claim 3, wherein the stochastic model further comprises a limit for an allowable deviation from the expected value, wherein comparing the difference signal to the expected value comprises determining if the deviation of the difference signal from the expected value exceeds the limit.

5. The method (300) according to claim 4, wherein if the decision data signal (321) indicates that the deviation of the difference signal from the expected value exceeds the limit, it is determined that the calibration of the system parameter of at least one of the first wind turbine (241) and the second wind turbine (242) is invalid.

6. The method (300) according to any of claims 3-5, wherein the expected value is generated by monitoring the difference of the calibrated system parameter measured at the first wind turbine (241) and the second wind turbine (242) over a predetermined period of time and averaging the monitored difference over the period of time.

7. The method (300) according to any of claims 4-6, wherein the limit is determined based on a standard deviation of the difference signal around the expected value.

8. The method (300) according to claim 7, wherein the limit is determined by multiplying the standard deviation by a predetermined scaling factor (z).

9. The method (300) according to any of claims 3-8, wherein processing (S320) the difference signal by the function based on the stochastic model further comprises
applying a filter to the difference signal to generate a filtered difference signal, wherein the filtered signal is compared to the expected value.

10. The method (300) according to claim 9, wherein the filter is a low-pass filter.

11. The method (300) according to any of the preceding claims, wherein said determining (S320) if the calibrated system parameter is a calibrated system parameter based on an invalid calibration is performed for each of plural pairs of said wind turbines, wherein the method further comprises
identifying, based on said determining, a reference wind turbine the calibration of the system parameter of which is not invalid, wherein if for at least one of the first and second wind turbines, it is determined that the calibration of the system parameter is invalid, the method further comprises
comparing the measured calibrated system parameter of at least one of the first (241) and second (242) wind turbines to the measured calibrated system parameter of the reference wind turbine to determine for which of the first and second wind turbines the calibration is invalid.

12. The method (300) according to claim 11, wherein said plural pairs of wind turbines comprise for each wind turbine of a group (200) of wind turbines pairs of the wind turbine with each other wind turbine of the group, wherein identifying the reference wind turbine comprises
determining for which wind turbine of the group the decision data signal indicates for the largest number of its pairs that the calibrated system parameter is not based on an invalid calibration.

13. The method (300) according to any of the preceding claims, wherein the method further comprises
if it is determined that the calibrated system parameter of at least one of the first wind turbine and the second wind turbine is based on an invalid calibration, recalibrating (S350) the invalidly calibrated system parameter, wherein the recalibrating comprises for each invalidly calibrated system parameter
correcting the invalidly calibrated system parameter by applying a correction value based on an average of a series of deviations, wherein the series of deviations comprises at least one deviation between the invalidly calibrated system parameter and a calibrated system parameter of at least one of the plurality of wind turbines the calibration of which is not invalid, or
or resetting a reference for the calibrated system parameter based on a deviation between the invalidly calibrated system parameter and a calibrated system parameter of at least one of the plurality of wind turbines the calibration of which is not invalid.

14. A control system (201, 202, 523) for monitoring the validity of a calibration of a system parameter individually generated by a plurality of spatially associated wind turbines, wherein the control system (201, 202, 523) is configured to perform the method (300) according to any of claims 1-13.

15. A computer program for monitoring the validity of a calibration of a system parameter individually generated by a plurality of spatially associated wind turbines, wherein the computer program comprises control instructions which, when executed by a processing unit of a control system (201, 202, 523), cause the processing unit to perform the method (300) according to any of claims 1-13.

FIG 1

FIG 2

FIG 3

FIG 4

| FIG 4A | FIG 4B |
|--------|--------|

FIG 4A

311

# FIG 4B

# FIG 5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/345476 A1 (GREGG PETER ALAN [US] ET AL) 3 December 2015 (2015-12-03) * paragraphs [0040], [0065], [0071], [0072]; figures 6,7 * | 1-15 | INV. F03D7/04 |
| A | EP 3 569 859 A1 (LABORELEC CVBA [BE]) 20 November 2019 (2019-11-20) * paragraphs [0007], [0019], [0026]; figures 2,3 * | 1-15 | |
| A | US 2020/166016 A1 (CORTIANA GIORGIO [DE]) 28 May 2020 (2020-05-28) * paragraphs [0010] - [0020], [0021], [0032], [0055] * | 1,14,15 | |
| A | US 2016/215759 A1 (FLEMING PAUL [US] ET AL) 28 July 2016 (2016-07-28) * paragraphs [0006], [0041], [0086], [0100]; figure 10 * | 1,14,15 | |
| A | EP 3 734 063 A1 (WOBBEN PROPERTIES GMBH [DE]) 4 November 2020 (2020-11-04) * paragraphs [0017], [0019], [0111] * | 1,14,15 | **TECHNICAL FIELDS SEARCHED (IPC)**<br><br>F03D |

The present search report has been drawn up for all claims

| Place of search | Date of completion of the search | Examiner |
|---|---|---|
| The Hague | 19 October 2021 | Bradley, David |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                                           
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 17 0620

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2021

| Patent document cited in search report | | Publication date | Patent family member(s) | | Publication date |
|---|---|---|---|---|---|
| US 2015345476 | A1 | 03-12-2015 | BR 102015012586 | A2 | 12-12-2017 |
| | | | CA 2892898 | A1 | 30-11-2015 |
| | | | CN 105221356 | A | 06-01-2016 |
| | | | EP 2949924 | A1 | 02-12-2015 |
| | | | US 2015345476 | A1 | 03-12-2015 |
| EP 3569859 | A1 | 20-11-2019 | NONE | | |
| US 2020166016 | A1 | 28-05-2020 | AU 2018293722 | A1 | 30-01-2020 |
| | | | CL 2019003853 | A1 | 30-10-2020 |
| | | | DE 102017114583 | A1 | 03-01-2019 |
| | | | EP 3645866 | A1 | 06-05-2020 |
| | | | JP 2020525702 | A | 27-08-2020 |
| | | | KR 20200024243 | A | 06-03-2020 |
| | | | US 2020166016 | A1 | 28-05-2020 |
| | | | WO 2019002439 | A1 | 03-01-2019 |
| US 2016215759 | A1 | 28-07-2016 | NONE | | |
| EP 3734063 | A1 | 04-11-2020 | EP 3734063 | A1 | 04-11-2020 |
| | | | WO 2020221893 | A1 | 05-11-2020 |

EPO FORM P0459

For more details about this annex : see Official Journal of the European Patent Office, No. 12/82